# FASCICULE DE BREVET EUROPEEN

(11) **EP 2 465 741 B1**
(45) Date de publication et mention de la délivrance du brevet: **29.05.2013**
(21) Numéro de dépôt: 11191261.4
(22) Date de dépôt: 30.11.2011
(51) Int. Cl.: B60T 11/04, B60T 13/04, B60T 13/74

(54) **Système de freins a servofrein électrique**
Elektrisch betätigtes Bremssystem
Electric servo assisted brake system

(30) Priorité: 20.12.2010 FR 1004986
(43) Date de publication de la demande: 20.06.2012
(73) Titulaire: Robert Bosch GmbH, 70442 Stuttgart (DE)
(72) Inventeur: Cagnac, Bastien, 60660 Cramoisy (FR); Richard, Philippe, 77500 Chelles (FR); Gaffe, François, 44420 La Turballe (FR)

(56) Documents cités:
- WO-A2-2010/069658
- FR-A1- 2 860 474
- FR-A1- 2 879 544

## Description

### Domaine de l'invention

La présente invention se rapporte à un système de freins à servofrein électrique comportant un servofrein agissant de façon commandée sur le maître-cylindre par une tige de poussée entraînée par le servofrein et actionnant le piston primaire du maître-cylindre, le servofrein étant relié par un piston plongeur à la tige de commande de la pédale de frein, le servofrein comportant un piston d'actionneur commandé par un moteur électrique par l'intermédiaire d'un entraînement à crémaillère composé d'au moins une crémaillère portée par le piston d'actionneur et engrenant avec un pignon droit porté par un axe fixe monté dans des paliers et solidaire d'une roue à vis engrenant avec une vis à la sortie du moteur d'entraînement.

### Etat de la technique

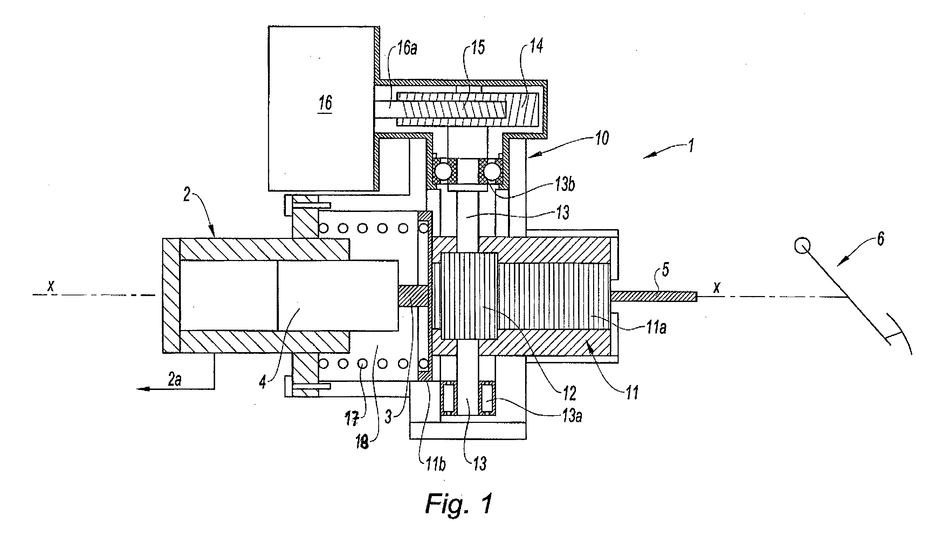

Il existe déjà des systèmes de freins équipés d'un servofrein électrique comportant un servofrein commandé pour agir sur le maître-cylindre par l'intermédiaire d'une tige de poussée entraînée par le servofrein pour actionner le maître-cylindre déjà connus dans le document WO 2010/069658 A2. Le servofrein est relié par un piston plongeur à la tige de commande de la pédale de frein. La figure 1 montre un tel système de freins à servofrein 1 électrique, connu, agissant sur le maître-cylindre de frein 2 par l'intermédiaire d'une tige de poussée 3 commandant le piston primaire 4. La tige de poussée 3 est entraînée par le servofrein 1. Lui-même relié à la tige de commande 5 de la pédale de frein 6 par l'intermédiaire de moyens connus non détaillés.

Le servofrein 1 se compose d'un boîtier 10 logeant dans l'axe d'actionnement (xx) du maître-cylindre 2, un piston d'actionneur 11 muni sur le côté d'une crémaillère 11a et coopérant avec un pignon droit 12, porté par un arbre 13 lui-même muni d'une roue à vis 14.

La roue à vis 14 engrène avec une vis 15 solidaire de l'arbre de sortie 16a d'un moteur électrique 16 et forme une transmission réversible. Le piston d'actionneur 11 est commandé dans le sens de l'actionnement des freins par les pignons, 12 à partir du moteur électrique 16. La commande dans le sens du défreinage est assurée par un ressort hélicoïdal de rappel 17 prenant appui dans le boîtier 10 du servofrein et contre la face 11b du piston d'actionneur 11. L'arbre 13 tourne librement en sens inverse puisque la rotation de la roue 14 peut faire tourner la vis 15 en sens inverse. Le piston d'actionneur 11 peut donc être repoussé par le ressort 17 contre sa butée de fin de course.

Le ressort 17 est logé dans la chambre 18 du boîtier 10 du servofrein entourant le volume recevant partiellement le maître-cylindre 2 et son piston 4.

L'arbre 13 du servofrein est monté à son extrémité libre dans un palier à rouleaux 13a et du côté opposé, le montage se fait dans un palier à roulement 13b. Le ressort hélicoïdal 17 est par nature un composant encombrant qui, même placé en partie autour de l'extrémité du maître cylindre, nécessite un boîtier encombrant de sorte que ce montage est globalement encombrant ce qui est un inconvénient sérieux pour son implantation dans l'enceinte du moteur d'un véhicule où la place disponible est des plus réduite. Cet encombrement limite aussi les possibilités d'implantation.

### But de l'invention

La présente invention a pour but de développer un système de freins à servofrein électrique dont l'encombrement soit diminué et la réalisation simplifiée pour faciliter son implantation dans l'enceinte d'un moteur de véhicule.

### Exposé et avantages de l'invention

A cet effet, l'invention a pour objet un système de freins à servofrein électrique du type décrit ci-dessus, caractérisé en ce que un ressort spiral, monté coaxialement à l'arbre portant le pignon de la crémaillère et le pignon de la transmission à vis du moteur, s'appuie par une extrémité sur l'arbre et par son autre extrémité sur le boîtier du servofrein, de façon à exercer un couple de rappel sur le piston de servofrein par l'intermédiaire de l'arbre et du pignon droit engrené avec la crémaillère, pour repousser le piston d'actionneur en position de repos.

Ce servofrein présente l'avantage d'un encombrement réduit par la suppression du ressort hélicoïdal entourant l'avant du servofrein en amont de la jonction avec le cylindre de servofrein dans lequel se déplace le piston primaire commandé par la tige de poussée. La suppression du ressort hélicoïdal permet ainsi de réduire considérablement les dimensions du boîtier à l'avant du servofrein et de rapprocher le moteur électrique de ce boîtier en réduisant la longueur de l'arbre portant le pignon engrènant avec la crémaillère du piston d'actionnement.

Cette réduction importante de l'encombrement est liée d'une part à l'encombrement très faible d'un ressort spiral par rapport à celui d'un ressort hélicoïdal pour le même travail élastique et d'autre part, au fait de supprimer l'emplacement en soi encombrant, d'implantation du ressort hélicoïdal au profit d'un encombrement intégré au voisinage de l'arbre à vis pour le ressort spiral.

Cette réduction importante d'encombrement est une réduction non seulement de l'encombrement global ou du boîtier du servofrein mais également une réduction des parties intermédiaires situées à l'intérieur du contour global. Cela se traduit par une diminution particulièrement significative du volume du boîtier du servofrein en tant que tel et donc par une réduction importante du poids du servofrein.

Suivant une autre caractéristique avantageuse, le ressort spiral de rappel est installé sur l'arbre dépassant de la roue à vis, et logé dans le faible agrandissement d'un boîtier au-dessus de la roue à vis. Par sa section, ce boîtier ne dépasse pas en encombrement la forme requise pour loger la roue à vis et la vis qui l'entraîne.

Bien que le ressort spiral puisse être installé à un autre emplacement sur l'arbre, par exemple au-delà de l'extrémité opposée à celle portant la roue à vis, il est préférable pour des raisons de montage, que le ressort spiral se situe au-dessus de la roue à vis. De façon générale selon l'invention, le ressort spiral attaque directement l'arbre portant le pignon de la crémaillère.

Suivant une autre caractéristique avantageuse, le servofrein est constitué par un ensemble jumelé formé de deux moteurs attaquant les deux côtés du piston d'actionneur par l'intermédiaire d'une transmission et une crémaillère respective.

De façon plus précise, le servofrein comporte deux ensembles d'entraînement, jumelés composés chacun d'une crémaillère portée par le piston d'actionneur engrenant avec un pignon droit porté par un arbre d'entraînement monté dans des paliers et relié à une roue à vis engrenant avec une vis portée par l'arbre de sortie d'un moteur électrique, et l'arbre traverse cette roue à vis pour porter le ressort spiral.

### Dessins

La présente invention sera décrite de manière plus détaillée à l'aide d'un mode de réalisation représenté dans les dessins annexés dans lesquels :
- la figure 1 est une vue schématique d'un système de freins à servofrein électrique selon l'état de la technique,
- la figure 2 est une vue schématique d'un système de freins à servofrein électrique selon l'invention.

### Description d'un mode de réalisation de l'invention

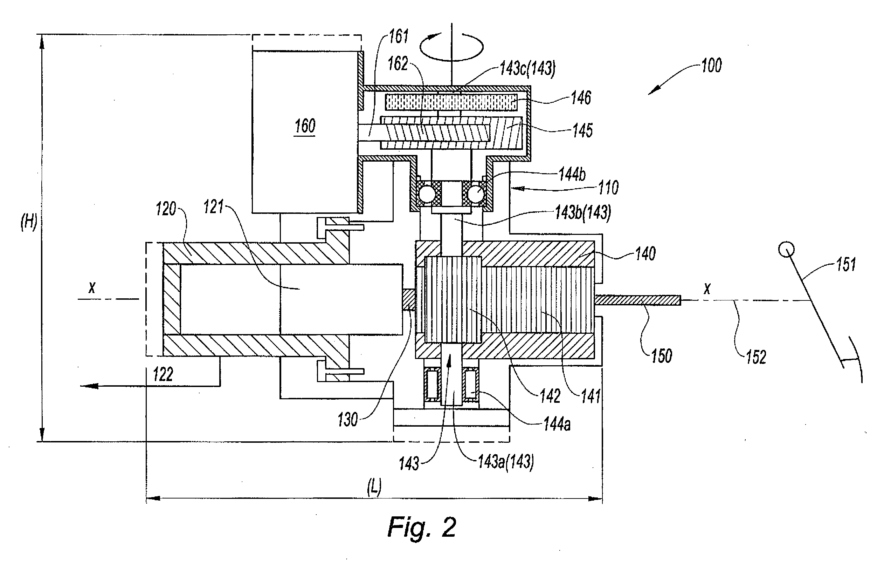

Selon la figure 2, l'invention a pour objet un système de freins équipé d'un servofrein électrique 100 actionnant un maître-cylindre de frein 120 par l'intermédiaire d'une tige de poussée 130 entraînée par le servofrein 100. Le servofrein 100 est commandé par la tige de commande 150 reliée à la pédale de frein 151 par l'intermédiaire d'une liaison mécanique constituée de tringles 152 non détaillées.

Le maître-cylindre 120 est figuré comme un maître-cylindre simple avec un piston 121 et le circuit de freins relié ici à l'unique sortie 122 représentée. En fait, le maître-cylindre est habituellement un maître-cylindre tandem à deux pistons, un piston primaire et un piston secondaire commandant chacun la pression du liquide de frein dans son circuit de freins.

Le servofrein 100 se compose d'un boîtier 110 de forme complexe, logeant dans sa partie située dans l'axe d'actionnement (xx) du maître-cylindre, un piston d'actionneur 140 muni d'une crémaillère 141 sur une face ou sur deux faces ; la ou les crémaillères sont elles mêmes alignées sur l'axe d'actionnement (xx). La crémaillère 141 coopère avec un pignon droit 142 porté par un arbre 143 logé par son extrémité 143a dans un palier à roulement à aiguilles 144a.

La partie intermédiaire 143b est montée dans le palier à roulement à billes 143c.

L'arbre 143 est solidaire d'une roue à vis 145 qui engrène avec une vis 162 portée par l'arbre de sortie 161 d'un moteur électrique 160. La transmission formée par la vis 162 et la roue à vis 145 est réversible.

L'arbre 143 dépasse au-delà de la roue à vis 145 et porte un ressort de rappel en forme de ressort spiral 146 dont une extrémité est solidaire de l'extrémité 143c de l'arbre 143, et l'autre solidaire d'un point fixe du boîtier 110. Le ressort 146 agit comme ressort de rappel dans le sens opposé au sens d'actionnement du piston 140 et du maître-cylindre 120 par le moteur 160 et la ligne de transmission en aval de celui-ci jusqu'à la crémaillère 141.

Lorsque le moteur 160 n'est pas alimenté, le ressort spiral 146 rappelle le pignon droit 142 et la roue à vis 145 tourne dans le sens opposé du fait de son engrènement avec la vis 162 qui fait tourner librement le moteur non alimenté, en sens inverse.

L'exemple décrit ci-dessus est celui d'un servofrein comportant une seule crémaillère et une seule ligne de transmission entre le moteur électrique et la crémaillère constituée par un seul moteur 160, une seule vis 162, une seule roue à vis 145 et un seul arbre de transmission 143 portant un seul pignon droit 142.

Mais il est également envisageable de réaliser un servofrein à deux moteurs jumelés entraînant deux crémaillères situées sur les côtés opposés du piston d'actionneur, toujours parallèlement à la direction d'action (xx). Chaque crémaillère coopère alors avec un pignon droit porté par un arbre d'entraînement lui-même monté dans des paliers et relié dans le sens de son entraînement à une roue à vis engrenant avec une vis portée par l'arbre de sortie d'un second moteur, jumelé au premier moteur. On a une vis commune entre deux roues à vis engrenant de manière synthétique chaque arbre dépasse de la roue à vis et porte un ressort spiral, agissant dans le sens du rappel du piston d'actionneur. Cette variante à deux entraînements jumelés, symétriques, n'est pas représentée.

La figure 2 montre le boîtier du servofrein connu tracé en traits interrompus au dessus du tracé du boîtier du servofrein selon l'invention. L'invention permet non seulement une réduction de la longueur hors tout (L) et de la hauteur hors tout (H) mais également une réduction importante de volume du boîtier 110 dans ses parties intermédiaires.

La réduction d'encombrement du servofrein, c'est-à-dire de son boîtier se traduit par une réduction de la longueur de la tige de poussée 130 puisque le logement du ressort hélicoïdal de rappel est supprimé ce qui permet de rapprocher le maître-cylindre du piston d'actionneur.

La suppression pratique du volume du ressort hélicoïdal de rappel permet également de réduire la longueur du boîtier reliant la transmission à roue à vis et le moteur électrique 160 du pignon 142 engrenant avec la crémaillère 141. L'augmentation du volume de la partie de boîtier logeant la roue à vis 145 et le ressort spiral 146, ne correspond pratiquement pas à une augmentation de l'encombrement dans cette direction et la partie du logement recevant le ressort spiral, a le même encombrement que la partie du logement de la roue à vis puisque le ressort spiral bénéficie du diamètre disponible à l'intérieur du boîtier du fait de la présence de la roue à vis.

La réduction globale de la forme du boîtier du servofrein entraîne une diminution importante du volume de la matière c'est-à-dire du poids ce qui est particulièrement avantageux.

L'invention s'applique de manière générale au domaine des freins hydroélectriques de véhicules automobiles.

### NOMENCLATURE DES ELEMENTS PRINCIPAUX

- 1: Servofrein électrique connu 2 Maître cylindre
2a Sortie du maître cylindre 3 Tige de poussée
- 4: Piston primaire
- 5: Tige de commande
- 6: Pédale de frein

- 10: Boîtier
- 11: Piston d'actionneur

- 11a: Crémaillère
- 11b: Face du piston d'actionneur

- 12: Pignon droit
- 13: Arbre
- 14: Roue à vis
- 15: Vis
- 16: Moteur électrique

- 16a: Arbre de sortie du moteur

- 17: Ressort hélicoïdal de rappel
- 18: Chambre

- 100: Servofrein selon l'invention
- 110: Boîtier du servofrein

- 120: Maître cylindre
- 121: Piston du maître cylindre
- 122: Sortie du maître cylindre

- 130: Tige de poussée

- 140: Piston d'actionneur
- 141: Crémaillère
- 142: Pignon droit
- 143: Arbre

- 143a: Extrémité de l'arbre 143
- 143b: Partie intermédiaire de l'arbre 143

- 143c: Extrémité de l'arbre 143
- 144a: Palier à roulement à aiguilles
- 144b: Palier à roulement à billes

- 145: Roue à vis
- 146: Ressort spiral

- 150: Tige de commande
- 151: Pédale de frein
- 152: Tringlerie

- 160: Moteur électrique
- 161: Arbre de sortie
- 162: Vis

- (xx): Axe d'actionnement
- H: Hauteur
- L: Longueur

## Revendications

1. Système de freins à servofrein électrique comportant un servofrein agissant de façon commandée sur le maître-cylindre par une tige de poussée entraînée par le servofrein et actionnant le piston primaire du maître-cylindre, le servofrein étant relié par un piston plongeur à la tige de commande de la pédale de frein,
le servofrein comportant un piston d'actionneur commandé par un moteur électrique par l'intermédiaire d'un entraînement à crémaillère composé d'au moins une crémaillère portée par le piston d'actionneur et engrenant avec un pignon droit porté par un axe fixe monté dans des paliers et solidaire d'une roue à vis engrenant avec une vis à la sortie du moteur d'entraînement,
système de freins **caractérisé en ce que**
un ressort spiral (146), monté coaxialement à l'arbre (143) portant le pignon (142) de la crémaillère (141) et le pignon (145) de la transmission à vis du moteur (160), s'appuie par une extrémité sur l'arbre (143) et par son autre extrémité sur le boîtier (110) du servofrein, de façon à exercer un couple de rappel sur le piston de servofrein (121) par l'intermédiaire de l'arbre (143) et du pignon droit (142) engrené avec la crémaillère (141), pour repousser le piston d'actionneur (140) en position de repos.

2. Système de freins selon la revendication 1,
**caractérisé en ce que**
le ressort spiral (146) est installé sur l'arbre (143) au-delà de la roue à vis (145).

3. Système de freins selon la revendication 1,
**caractérisé en ce qu'**
il comporte deux ensembles d'entraînement, jumelés composés chacun d'une crémaillère (141) portée par le piston d'actionneur (140) engrenant avec un pignon droit (142) porté par un arbre d'entraînement (143) monté dans des paliers et relié à une roue à vis (145) engrenant avec une vis (162) portée par l'arbre de sortie d'un moteur électrique (160), et l'arbre (143) traverse cette roue à vis (145) pour porter le ressort spiral (146), dont une extrémité est reliée à un point fixe du boîtier (140) et l'autre extrémité est reliée à l'arbre (143).

## Patentansprüche

1. Bremssystem mit elektrischer Servobremse, das eine Servobremse aufweist, die über eine Stoßstange, die durch die Servobremse mitgenommen wird, auf gesteuerte Weise auf den Hauptzylinder einwirkt und den Primärkolben des Hauptzylinders betätigt, wobei die Servobremse durch einen Tauchkolben mit der Steuerstange des Bremspedals verbunden ist,
wobei die Servobremse einen Betätigungskolben aufweist, der durch einen Elektromotor über einen Zahnstangenantrieb gesteuert wird, der aus mindestens einer Zahnstange besteht, die durch den Betätigungskolben getragen wird und mit einem Stirnrad ineinandergreift, das durch eine feste Achse getragen wird, die in Lagern angebracht ist und fest mit einem Schneckenrad verbunden ist, das am Ausgang des Antriebsmotors mit einer Schnecke ineinandergreift,
Bremssystem, **dadurch gekennzeichnet, dass**
eine Spiralfeder (146), die koaxial zur Welle (143) angebracht ist, die das Rad (142) der Zahnstange (141) und das Rad (145) des Schneckengetriebes des Motors (160) trägt, sich über ein Ende auf die Welle (143) und über ihr anderes Ende auf das Gehäuse (110) der Servobremse stützt, derart, dass über die Welle (143) und das Stirnrad (142), das mit der Zahnstange (141) ineinandergreift, ein Rückstellmoment auf den Servobremskolben (121) ausgeübt wird, um den Betätigungskolben (140) in die Ruhestellung zurückzudrücken.

2. Bremssystem nach Anspruch 1,
**dadurch gekennzeichnet, dass**
die Spiralfeder (146) auf der Welle (143) jenseits des Schneckenrads (145) eingerichtet ist.

3. Bremssystem nach Anspruch 1,
**dadurch gekennzeichnet, dass**
es zwei Antriebsbaugruppen aufweist, die paarweise jeweils aus einer Zahnstange (141) bestehen, die durch den Betätigungskolben (140) getragen wird und mit einem Stirnrad (142) ineinandergreift, das durch eine Antriebswelle (143) getragen wird, die in Lagern angebracht ist und mit einem Schneckenrad (145) verbunden ist, das mit einer Schnecke (162) ineinandergreift, die durch die Abtriebswelle eines Elektromotors (160) getragen wird, und die Welle (143) dieses Schneckenrad (145) durchquert, um die Spiralfeder (146) zu tragen, von der ein Ende mit einem festen Punkt des Gehäuses (140) verbunden ist und das andere Ende mit der Welle (143) verbunden ist.

## Claims

1. Electric servo-assisted brake system comprising a servo-assisted brake acting in a controlled manner on the master cylinder via a thrust rod driven by the servo-assisted brake and actuating the primary piston of the master cylinder, the servo-assisted brake being linked by a plunger piston to the control rod of the brake pedal,
the servo-assisted brake comprising an actuator piston controlled by an electric motor via a rack drive system consisting of at least one rack borne by the actuator piston and meshing with a spur pinion borne by a fixed axis mounted in bearings and securely attached to a worm gear meshing with a screw at the output of the drive motor,
the brake system being **characterized in that**
a spiral spring (146), mounted coaxially to the shaft (143) bearing the pinion (142) of the rack (141) and the pinion (145) of the screw transmission of the motor (160), bears by one end on the shaft (143) and by its other end on the housing (110) of the servo-assisted brake, so as to exert a return torque on the servo-assisted brake piston (121) via the shaft (143) and the spur pinion (142) meshed with the rack (141), to push back the actuator piston (140) to the rest position.

2. Brake system according to Claim 1,
**characterized in that**
the spiral spring (146) is installed on the shaft (143) beyond the worm gear (145).

3. Brake system according to Claim 1,
**characterized in that**
it comprises two twinned drive assemblies each consisting of a rack (141) borne by the actuator piston (140) meshing with a spur pinion (142) borne by a drive shaft (143) mounted in bearings and linked to a worm gear (145) meshing with a screw (162) borne by the output shaft of an electric motor (160), and the shaft (143) passes through this worm gear (145) to bear the spiral spring (146), one end of which is linked to a fixed point of the housing (140) and the other end of which is linked to the shaft (143).
